# EUROPÄISCHE PATENTSCHRIFT

(11) **EP 0 814 984 B1**
(45) Veröffentlichungstag und Bekanntmachung des Hinweises auf die Patenterteilung: **06.05.1999**
(21) Anmeldenummer: 96902880.2
(22) Anmeldetag: 22.02.1996
(51) Int. Cl.: B60T 8/36, B60T 13/68

(54) **MAGNETVENTIL IN EINER HYDRAULISCHEN BREMSANLAGE FÜR KRAFTFAHRZEUGE**
SOLENOID VALVE IN A MOTOR VEHICLE HYDRAULIC BRAKING SYSTEM
ELECTROVANNE FAISANT PARTIE D'UN SYSTEME DE FREINAGE HYDRAULIQUE D'AUTOMOBILE

(30) Priorität: 29.03.1995 DE 19511455
(43) Veröffentlichungstag der Anmeldung: 07.01.1998
(73) Patentinhaber: ROBERT BOSCH GMBH, 70442 Stuttgart (DE)
(72) Erfinder: BAREISS, Alexander, Charleston, SC 29418 (US); KRAUTER, Michael, Charleston, SC 28418 (US)
(86) Internationale Anmeldenummer: DE9600274
(87) Internationale Veröffentlichungsnummer: WO9630244

(56) Entgegenhaltungen:
- WO-A-92/04214
- WO-A-93/15941
- WO-A-94/08831
- DE-A- 4 041 506
- DE-A- 4 236 505

## Beschreibung

### Stand der Technik

Die Erfindung geht aus von einem Magnetventil nach der Gattung des Patentanspruchs.

Ein derartiges Magnetventil ist aus dem Fachbuch "Bremsanlagen für Kraftfahrzeuge/Bosch", 1. Auflage, Düsseldorf: VDI-Verlag, 1994, Seiten 69, 70 bekannt (Bild 8, c). Es findet Anwendung in einer schlupfgeregelten hydraulischen Bremsanlage (Bild 10) für Kraftfahrzeuge, und zwar als Ansaugventil in einer Saugleitung einer selbstansaugenden Hochdruckpumpe, mit der im Falle einer Antriebsschlupfregelung Bremsdruck erzeugt wird. Dieses bekannte Magnetventil zeichnet sich durch einen relativ großen Durchlaßquerschnitt aus, damit die Hochdruckpumpe auch bei tiefen Temperaturen ausreichend schnell Druckmittel aus dem Hauptbremszylinder ansaugen kann.

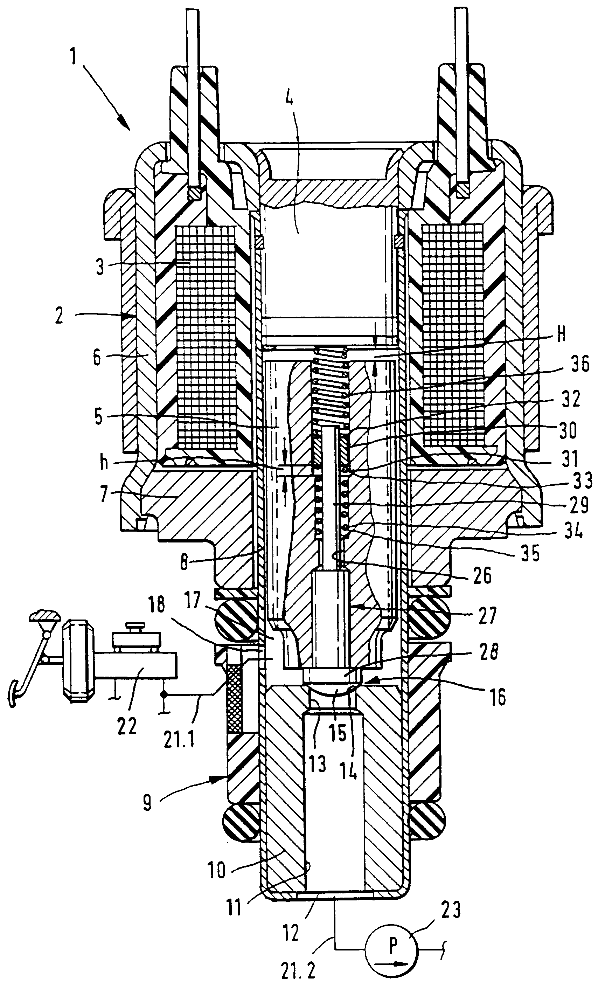

Moderne Kraftfahrzeuge werden künftig mit Bremsanlagen (z. B. gemäß DE-Patentanmeldung P 44 41 791.8, Fig. 4) auch zum automatischen Bremsen ausgestattet sein, bei denen beispielsweise in Abhängigkeit vom Fahrzeugverhalten, der Verkehrssituation oder in dem Fahrweg auftauchenden Hindernissen die Bremsanlage auch unabhängig vom Fahrer aktiviert, Bremsdruck in obengenannter Weise aufgebaut und moduliert wird. Befindet sich dabei das Fahrzeug bereits in einem vom Fahrer ausgelösten Bremsvorgang, so muß das Magnetventil in der Saugleitung gegen den vom Hauptbremszylinder erzeugten Druck öffnen. Um die erforderlichen Öffnungskräfte zu erzielen, könnte der Magnetkreis des Ventils entsprechend dimensioniert werden. Dies ist jedoch unerwünscht, weil es das Magnetventil größer, schwerer und teurer macht.

### Vorteile der Erfindung

Das erfindungsgemäße Bremsventil mit den kennzeichnenden Merkmalen des Patentanspruchs hat demgegenüber den Vorteil, daß bei vom Hauptbremszylinder erzeugtem Druck die am Beginn des Ankeröffnungshubes niedrige Magnetkraft genutzt wird, um den druckausgeglichenen Magnetanker nur gegen die Kraft der Druckfeder zu bewegen, dabei aber den druckunausgeglichenen, von einer hydraulischen Schließkraft belasteten Stößel so lange in seiner das Ventil schließenden Stellung zu belassen, bis nach einem Teilhub des Ankers und damit bei höherer Magnetkraft der Stößel vom Anker mitgenommen und das Ventil geöffnet wird. Da nun der Stößel ebenfalls druckausgeglichen ist, vermag die gegenüber der Rückstellfeder stärkere Druckfeder den Stößel in den Magnetanker zurückzuführen. Somit ist es ohne Vergrößerung des Magnetteiles des Ventils möglich, trotz hauptbremszylinderseitigem Druck in der Saugleitung einen relativ großen Durchlaßquerschnitt bereitzustellen. Bei nicht betätigtem Hauptbremszylinder wird dagegen der Stößel zugleich mit dem Magnetanker in die Offenstellung des Ventils überführt.

Durch die in den Unteransprüchen aufgeführten Maßnahmen sind vorteilhafte, die wirtschaftliche Fertigung des im Patentanspruch angegebenen Magnetventils begünstigende sowie dessen Bauvolumen niedrighaltende Weiterbildungen und Verbesserungen möglich.

### Zeichnung

Ein Ausführungsbeispiel der Erfindung ist in der Zeichnung anhand eines Längsschnitts durch ein Magnetventil vereinfacht dargestellt und in der nachfolgenden Beschreibung näher erläutert.

### Beschreibung des Ausführungsbeispiels

Ein in der Zeichnung im Längsschnitt dargestelltes Magnetventil 1 ist zur Verwendung in einer hydraulischen Bremsanlage für Kraftfahrzeuge bestimmt. Das Magnetventil 1 hat einen Magnetteil 2, bestehend aus einer Magnetspule 3, einem Polkern 4, einem Magnetanker 5 und einem die Magnetspule 3 umgreifenden Gehäusemantel 6, welcher polkernabgewandt mit einem Jochteil 7 verbunden ist. Eine das Jochteil 7 durchgreifende Führungshülse 8 für den Magnetanker 5 ist polkernseitig mit diesem druckmitteldicht verschweißt. Zu einem Hydraulikteil 9 des Magnetventils 1 gehörend befindet sich polkernabgewandt in der Ankerführungshülse 8 ein eingepreßter Ventilkörper 10. Dieser hat eine Durchgangsbohrung 11, welcher einerseits mit einer Auslaßöffnung 12 der Ankerführungshülse 8 in Verbindung steht; andererseits mündet die Durchgangsbohrung nach einer Ventilöffnung 13 in einen Ventilsitz 14. Mit dem Ventilsitz 14 arbeitet ein kalottenförmig begrenztes Schließglied 15 eines Sitzventils 16 zusammen. Schließgliedseitig ist in der Ankerführungshülse 8 eine Ventilkammer 17 gebildet, welche eine Einlaßöffnung 18 für Druckmittel hat.

Das Magnetventil 1 liegt im Zuge einer Saugleitung 21, die von einem pedalbetätigbaren Hauptbremszylinder 22 ausgeht und zur Saugseite einer selbstansaugenden Hochdruckpumpe 23 führt. Dabei ist ein hauptbremszylinderseitiger Teil 21.1 der Saugleitung 21 an die Einlaßöffnung 18 angeschlossen, während ein pumpenseitiger Leitungsteil 21.2 mit der Auslaßöffnung 12 der Ankerführungshülse 8 in Verbindung steht.

Das Schließglied 15 des Sitzventils 16 ist an einem längsbewegbar in einer Längsbohrung 26 des Magnetankers 5 aufgenommenen Stößel 27 ausgebildet. Der Stößel 27 hat sitzventilseitig einen durchmessergroßen Kopf 28, an dem sich die Kalotte des Schließgliedes 15 befindet, und sitzventilabgewandt einen durchmesserkleinen, vollständig in der Längsborrung 26 verlaufenden Schaft 29. Auf den Schaft 29 ist eine Hülse 30 aufgepreßt. Diese bildet einen Bund im Verlauf des Schaftes 29 mit einer schließgliedzugewandten Stirnseite 31 sowie einer schließgliedabgewandten Stirnseite 32. Der schließgliedzugewandten Stirnseite 31 ist im als Ankerteilhub bezeichneten Abstand h einer den Durchmesser der Längsbohrung 26 verengende Stufe 33 zugeordnet. An der schließgliedzugewandten Stirnseite 31 greift eine auf dem Schaft 29 des Stößels 27 längsgeführte Druckfeder 34 an, welche hülsenabgewandt an einer zweiten, den Durchmesser der Längsbohrung 26 nochmals verringernden Stufe 35 abgestützt ist. Polkernseitig ist in der Längsbohrung 26 eine gleichfalls als Druckfeder ausgebildete Rückstellfeder 36 des Magnetventils 1 aufgenommen. Diese greift einerseits an der schließgliedabgewandten Stirnseite 32 der Hülse 30 an, andererseits ist sie am Polkern 4 abgestützt. Die Druckfeder 34 besitzt eine größere Vorspannung als die Rückstellfeder 36. In der gezeichneten Ruhestellung des Magnetventils 1 ist daher der Kopf 28 des Stößels 27 am Magnetanker 5 abgestützt, und die schließgliedzugewandte Stirnseite 31 der Hülse 30 nimmt den bereits erwähnten Abstand h zur Stufe 33 der Längsbohrung 26 ein. Unter der Wirkung der Rückstellfeder 36 greift das Schließglied 15 des Sitzventils 16 am Ventilsitz 14 des Ventilkörpers 10 an und trennt die druckmittelleitende Verbindung zwischen dem Hauptbremszylinder 22 und der Saugseite der Hochdruckpumpe 23. In dieser Stellung nimmt der Magnetanker 5 gegenüber dem Polkern 4 einen als Ankerhub bezeichneten Abstand H ein.

Das Magnetventil 1 hat folgende Wirkungsweise:
Durch Bestromen der Magnetspule 3 wird ein Magnetfeld und hierdurch eine Kraftwirkung auf den Magnetanker 5 in Richtung auf den Polkern 4 erzeugt. Bei nichtbetätigtem Hauptbremszylinder 22 bestehen im wesentlichen keine Druckunterschiede zwischen den beiden Teilen 21.1 und 21.2 der Saugleitung 21, so daß der druckmittelumspülte Magnetanker 5 einschließlich seines Schließgliedes 15 druckausgeglichen ist. Der Magnetanker 5 und der Stößel 27 werden daher unter Überwindung des Ankerhubes H gegen den Polkern 4 gezogen. Dabei führt der Stößel 27 keine Relativbewegung bezüglich des Magnetankers 5 aus, weil die Vorspannung und die Steifigkeit der Druckfeder 34 größer sind als die der Rückstellfeder 36.

Wird dagegen der Hauptbremszylinder 22 betätigt, so kann zwischen dem hauptbremszylinderseitigen Teil 21.1 und dem pumpenseitigen Teil 21.2 der Saugleitung 21 ein erhebliches Druckgefälle herrschen. Dabei unterliegt der Magnetanker 5 dem hauptbremszylinderseitigen Druck, die der Ventilöffnung 13 zugewandte Fläche des Schließgliedes 15 am Stößel 27 ist dagegen weitgehend drucklos. Während also der Magnetanker 5 auch unter diesen Verhältnissen druckausgeglichen ist, trifft dies für den Stößel 27 nicht zu. Der Stößel 27 unterliegt daher einer hydraulischen, gegen den Ventilsitz 14 gerichteten Schließkraft. Überwiegen die hydraulische Schließkraft und die Vorspannkraft der Rückstellfeder 36 die bei Erregen der Magnetspule 3 auf den Magnetanker 5 ausgeübte Magnetkraft sowie die Vorspannkraft der Druckfeder 34, so verharrt das Schließglied 15 während des Bewegens des Magnetankers 5 gegen den Polkern 4 zunächst auf dem Ventilsitz 14. Es tritt somit eine Relativbewegung des Magnetankers 5 gegenüber dem Stößel 27 auf. Nach Überwinden des Ankerteilhubes h trifft jedoch die Stufe 33 der Längsbohrung 26 des Magnetankers 5 auf die schließgliedzugewandte Stirnseite 31 der Hülse 30 am Stößelschaft 29. Da durch die Annäherung des Magnetankers 5 an den Polkern 4 die Magnetkraft erheblich zugenommen hat, vermag diese nun im Zusammenwirken mit der von der Druckfeder 34 auf den Stößel 27 ausgeübten Kraft die zur Rückstellfeder 36 gleichwirkende hydraulische Schließkraft am Stößel 27 zu überwinden und das Schließglied 15 vom Ventilsitz 14 abzuheben. Während der Magnetanker 5 den restlichen Teil des Ankerhubes H zurücklegt, beginnt sich das Druckgefälle zwischen der Ventilkammer 17 und der Durchgangsbohrung 11 des Ventilkörpers 10 auszugleichen. Die hydraulische Schließkraft am Stößel 27 kommt damit in Wegfall, so daß die in der Druckfeder 34 gespeicherte Energie den Stößel 27 in eine Lage überführt, in welcher, wie dargestellt, die schließgliedzugewandte Stirnseite 31 der Hülse 30 den Abstand h zur Stufe 33 der Längsbohrung 26 einnimmt und der Kopf 28 des Stößels 27 am Magnetanker 5 abgestützt ist. In der Offenstellung des Magnetventils 1 nimmt somit das Schließglied 15 einen dem Ankerhub H entsprechenden Abstand zum Ventilsitz 14 ein. Das Magnetventil 14 gibt jetzt seinen vollen Durchlaßquerschnitt frei.

Bei Beenden der Bestromung der Magnetspule 3 bricht die Magnetkraft zusammen, und der Magnetanker 5 kehrt unter der Wirkung der Rückstellfeder 36 in seine gezeichnete Stellung zurück, in welcher das Schließglied 15 des Stößels 27 auf den Ventilsitz 14 aufsitzt und das Sitzventil 16 absperrt.

## Patentansprüche

1. Magnetventil (1) in einer zwischen einem Hauptbremszylinder (22) und der Saugseite einer Hochdruckpumpe (23) verlaufenden Saugleitung (21) einer hydraulischen Bremsanlage für Kraftfahrzeuge,
mit den folgenden Merkmalen:
- ein unter der Wirkung einer vorgespannten Rückstellfeder (36) stehendes Schließglied (15) greift an einem eine Ventilöffnung (13) umschließenden Ventilsitz (14) an,
- das Schließglied (15) ist dem hauptbremszylinderseitigen Teil (21.1) der Saugleitung (21), der Ventilsitz (14) dem pumpenseitigen Leitungsteil (21.2) zugeordnet,
- das Schließglied (15) ist durch Magnetkraftwirkung auf einen gegen die Kraft der Rückstellfeder (36) verschiebbaren Magnetanker (5), der in einer mit dem hauptbremszylinderseitigen Teil (21.1) der Saugleitung (21) verbundenen Ventilkammer (17) aufgenommen ist, vom Ventilsitz (14) abhebbar,
gekennzeichnet durch die weiteren Merkmale:
- das Schließglied (15) ist an einem Stößel (27) angeordnet,
- der Stößel (27) ist in einer durchgehenden Längsbohrung (26) des Magnetankers (5) relativ zu diesem längsbewegbar aufgenommen,
- die relative Längsbewegung des Stößels (27) ist auf einen Hub (h) kleiner dem Ankerhub (H) beschränkt,
- die Rückstellfeder (36) greift schließgliedabgewandt wenigstens mittelbar am Stößel (27) an,
- am Stößel (27) greift wenigstens mittelbar ferner eine der Wirkung der Rückstellfeder (36) entgegenwirkende Druckfeder (34) an, die am Magnetanker (5) abgestützt ist,
- die Vorspannung der Druckfeder (34) ist größer als die der Rückstellfeder (36).

2. Magnetventil nach Anspruch 1, dadurch gekennzeichnet, daß der Stößel (27) einen durchmessergroßen, am Magnetanker (5) abgestützten Kopf (28) mit Schließglied (15) und einen durchmesserkleinen, in der Längsbohrung (26) des Magnetankers (5) verlaufenden Schaft (29) mit einem Bund (Hülse 30) hat, an dessen schließgliedseitiger Stirnseite (31) die Druckfeder (34) und an dessen schließgliedabgewander Stirnseite (32) die Rückstellfeder (36) angreifen.

3. Magnetventil nach Anspruch 2, dadurch gekennzeichnet, daß der Bund von einer auf den Schaft (29) des Stößels (27) aufgepreßten Hülse (30) gebildet ist.

4. Magnetventil nach Anspruch 2, dadurch gekennzeichnet, daß die Längsbohrung (26) des Magnetankers (5) eine mit der schließgliedseitigen Stirnseite (31) des Bundes (Hülse 30) zusammenwirkende, die Längsbewegung des Stößels (27) beschränkende Stufe (33) aufweist.

5. Magnetventil nach Anspruch 3, dadurch gekennzeichnet, daß die Druckfeder (34) auf dem Schaft (29) des Stößels (27) längsgeführt ist.

## Claims

1. Solenoid valve (1) in a suction line (21), running between a master brake cylinder (22) and the intake side of a high-pressure pump (23), of a hydraulic brake system for motor vehicles, having the following features:
- a closing element (15) which is under the effect of a prestressed restoring spring (36) and acts on a valve seat (14) which surrounds a valve opening (13),
- the closing element (15) is assigned to the master-brake-cylinder-side part (21.1) of the suction line (21), and the valve seat (14) is assigned to the pump-side line part (21.2),
- the closing element (15) can be lifted off from the valve seat (14) by the action of magnetic force on a magnet armature (5) which can be displaced counter to the force of the restoring spring (36) and is held in a valve chamber (17) which is connected to the master-brake-cylinder-side part (21.1) of the suction line (21),
characterized by the further features:
- the closing element (15) is arranged on a plunger (27),
- the plunger (27) is held in a continuous longitudinal drilled hole (26) in the magnet armature (5) so as to be longitudinally movable in relation thereto,
- the relative longitudinal movement of the plunger (27) is limited to a travel (h) smaller than the armature travel (H),
- the restoring spring (36) acts, facing away from the closing element, at least indirectly on the plunger (27),
- a compression spring (34) which counteracts the effect of the restoring spring (36) and which is supported on the magnet armature (5) also acts at least indirectly on the plunger (27),
- the prestress of the compression spring (34) is greater than that of the restoring spring (36).

2. Solenoid valve according to Claim 1, characterized in that the plunger (27) has a head (28) which has a large diameter, is supported on the magnet armature (5) and has a closing element (15) and a stem (29) which has a small diameter, runs in the longitudinal drilled hole (26) of the magnet armature (5) and has a collar (sleeve 30) on whose end side (31) near to the closing element the compression spring (34) acts and on whose end side (32) facing away from the closing element the restoring spring (36) acts.

3. Solenoid valve according to Claim 2, characterized in that the collar is formed by a sleeve (30) which is pressed onto the stem (29) of the plunger (27).

4. Solenoid valve according to Claim 2, characterized in that the longitudinal drilled hole (26) of the magnet armature (5) has a step (33) which interacts with the end side (31), near to the closing element, of the collar (sleeve 30) and which restricts the longitudinal movement of the plunger (27).

5. Solenoid valve according to Claim 3, characterized in that the compression spring (34) is longitudinally guided on the stem (29) of the plunger (27).

## Revendications

1. Electrovanne (1) comportant une conduite d'aspiration (21) reliant un maître-cylindre de frein (22) et le côté d'aspiration d'une pompe haute pression (23) dans une installation de frein hydraulique de véhicule automobile, dans laquelle :
- un organe d'obturation (15) soumis à l'action d'un ressort de rappel précontraint (36) agit contre un siège de soupape (14) entourant une ouverture de soupape (13),
- l'organe d'obturation (15) est associé à la partie (21.1) de la conduite d'aspiration du côté du maître-cylindre de frein, et le siège de soupape (14) est associé à la partie (21.2) de la conduite du côté de la pompe,
- l'organe d'obturation (15) peut être soulevé du siège de soupape (14) par la force magnétique exercée par un induit (5) coulissant contre la force du ressort de rappel (36), cet induit étant logé dans une chambre de soupape (17) reliée à la partie (21.1) de la conduite d'aspiration du côté du maître-cylindre de frein,
caractérisée en ce que
- l'organe d'obturation (15) est porté par un poussoir (27),
- le poussoir (27) est logé dans un perçage longitudinal (26) traversant de l'induit (5), en pouvant coulisser longitudinalement dans ce perçage,
- le mouvement longitudinal relatif du poussoir (27) est limité à une course (h) inférieure à la course (H) de l'induit,
- le ressort de rappel (36) agit du côté opposé à l'organe d'obturation, au moins indirectement sur le poussoir (27),
- le poussoir (27) est en outre soumis au moins indirectement à l'action d'un ressort de compression (34) s'opposant à l'action du ressort de rappel (36), ce ressort de compression s'appuyant contre l'induit (5),
- la précontrainte du ressort de compression (34) est supérieure à celle du ressort de rappel (36).

2. Electrovanne selon la revendication 1,
caractérisée en ce que
le poussoir (27) a une tête (28) faisant partie de l'organe d'obturation (15) et s'appuyant contre l'induit (5) ainsi qu'un corps (29) de diamètre plus petit, passant dans le perçage longitudinal (26) de l'induit (5), le corps (29) ayant une collerette (manchon 30) dont la face frontale (31) tournée vers l'organe d'obturation reçoit le ressort de compression (34) et dont la face frontale (32) non tournée vers l'organe d'obturation reçoit le ressort de rappel (36).

3. Electrovanne selon la revendication 2,
caractérisée en ce que
la collerette est constituée par un manchon (30) frété sur le corps (29) du poussoir (27).

4. Electrovanne selon la revendication 2,
caractérisée en ce que
le perçage longitudinal (26) de l'induit (5) comporte un gradin (33) limitant le mouvement longitudinal du poussoir (27) en coopérant avec la face frontale (31) de la collerette (manchon 30) du côté de l'organe d'obturation.

5. Electrovanne selon la revendication 3,
caractérisée en ce que
le ressort de compression (34) est guidé longitudinalement sur le corps (29) du poussoir (27).
